Europäisches Patentamt

(19) European Patent Office

Office européen des brevets

(11) Publication number: **0 057 182**
**B1**

(12) **EUROPEAN PATENT SPECIFICATION**

(45) Date of publication of patent specification: **10.12.86**

(51) Int. Cl.⁴: **B 27 B 17/00**

(21) Application number: **81900857.4**

(22) Date of filing: **08.08.80**

(86) International application number:
**PCT/US80/01012**

(87) International publication number:
**WO 82/00437 18.02.82 Gazette 82/06**

(54) **SWITCH-BRAKE INTERLOCK FOR CHAIN SAW.**

(43) Date of publication of application:
**11.08.82 Bulletin 82/32**

(45) Publication of the grant of the patent:
**10.12.86 Bulletin 86/50**

(84) Designated Contracting States:
**AT CH DE FR GB LI LU NL SE**

(56) References cited:
**US-A-1 770 241**
**US-A-2 586 722**
**US-A-3 009 999**
**US-A-3 664 390**
**US-A-3 769 481**

(73) Proprietor: **Black & Decker Inc.**
**Drummond Plaza Office Park 1423 Kirkwood Highway**
**Newark Delaware 19711 (US)**

(72) Inventor: **OVERY, Colin**
**168 Ferguson Drive**
**Brockville Ontario K6V 4R6 (CA)**
Inventor: **DYNIE, Ernest R.**
**1367 Linden Crescent**
**Brockville Ontario (CA)**

(74) Representative: **Gilmour, David Cedric Franklyn et al**
**POTTS, KERR & CO. 15 Hamilton Square**
**Birkenhead Merseyside L41 6BR (GB)**

Courier Press, Leamington Spa, England.

## Description

The present invention relates to a control or shut-off device for a switch mounted on a housing and preferably to control the operation of a motive means, such as an electric motor, which powers a chain saw.

Heretofore the prior art used brake lever engagement to deactivate the electrical system of an ICE (Internal Combustion Engine) — see for example U.S. Specification 3,664,390. Various other devices were used such as dead man switches and clutches. False tripping of the prior art shut-off devices could be a problem while clutches might react too slowly if used alone to prevent possible engine or motor damage. In any event, no prior art shut-off device was trigger associated so as to preclude subsequent false start-ups once braking had become necessary.

A switch with overload protection for use in a power tool is disclosed in U.S. Patent Specification 3,009,999 and wherein the overload is an overload current resulting from overload of an electric motor driving the tool, and wherein a bimetallic strip displaces in response to the overload and deactivates the switch supplying current to the motor, said switch requiring both resetting of the activating trigger therefor and the bimetallic strip before the motor may be re-energised. In this switch mounted in a housing, a trigger is provided displaceably mounted in the housing for activating the switch and the bimetallic strip acts as shut-off means operable to deactivate the switch and to prevent reactivation of the switch without release and resetting of the trigger.

The problem of the prior chain saws is that they do not provide a physically actuable brake and shut-off system which requires resetting of the actuating switch or of the actuating switch and brake.

The present invention solves the prior art problem by positively requiring selective resetting of an actuating switch or of the actuating switch and brake.

It is an object of the present invention to provide an improved switch-brake interlock, preferably for a chain saw, which overcomes the prior art disadvantages; which is simple, reliable and economical; which uses an actuator linked to the brake and operative therewith; which requires resetting of the actuator so that the brake must be off and the trigger released; which will shut off the power upon actuation of the brake; which preferably uses a microswitch engageable by the actuator; which preferably uses a trigger and microswitch requiring an intermediate actuator positionable to permit operation of the switch or to prevent such operation. Preferably the switch-brake interlock is one which fulcrums the actuator during operation; which uses a shiftable link intermediate the trigger and the switch to permit or to prevent actuation therebetween; and which uses a shiftable linkactuated responsive the position of the brake to permit or to prevent the trigger from being operable on the switch.

According to a first aspect of the present invention (claim 1) there is provided a control device for a switch mounted in a housing, comprising a trigger displaceably mounted in the housing for actuating the switch, shutoff means operable to deactuate the switch and to prevent reactuation of the switch without release and resetting of the trigger (e.g. US—A—3009999), characterised in that (a) the trigger is shiftably mounted in the housing remote from the switch, (b) the shut-off means includes a link operatively associated to be selectively movable by the trigger to cause the.link to be shifted along a path toward the switch, (c) the shut-off means also includes a means connected to the link having a rest position and a removal position, (d) the means in the rest position permitting the link to be shifted along a path to engage the switch, and (e) the means in the removal position preventing the link from engaging the switch by removing the link from the path of the switch.

According to a second aspect of the present invention (claim 6) there is provided a shut-off device to control the operation of a motive means which powers a chain saw having a housing with a brake means operative to stop the chain saw and a switch mounted in the housing and a displaceable switch-contacting member urgeable against the switch for activating the switch (e.g. US—A—3664390); characterised by the feature that the shut-off device comprises a trigger which is mounted in the housing to be shiftable into non-intersecting relationship with the switch and actuable to activate said switch, which is biased "off" and shiftable to "on", and link means operable to permit deactivation of the switch and including a link as switch contacting member which is acted upon by the brake means to be shifted therewith from between the switch and trigger; said link normally permitting trigger actuation of the switch, and on actuation of the brake means said link being at least partially removed from between the switch and the trigger to cause the switch to be restored to its biased off position.

Starting from the state of the art as exemplified by US—A—3664390 the invention provides in a third aspect a shut-off device to control the operation of a motive means which powers a chain saw according to claim 13.

Starting from the state of the art as exemplified by US—A—3009999 the invention provides in a fourth aspect a shut-off device for a motive means according to claim 19.

This invention will be described further, by way of example, with reference to the accompanying drawings, in which:—

Fig. 1 is a perspective elevational view of a chain saw embodying the present invention.

Fig. 2 is a side elevational view, partially cut away to show the actuator in the position awaiting trigger depression to actuate the microswitch via the actuator.

Fig. 3 is a side elevational view, partially cut away to show the trigger depressed to pivot the actuator to operate the microswitch.

Fig. 4 is a side elevational view, partly cut away, showing the brake actuated by the forward position of the lever to shift the actuator to a remote "off" position.

Fig. 5 is a side elevational view, partly cut away, showing that trigger depression prevents restoration of the actuator to its FIG. 1 position, thereby preventing restarting or reoperation of the microswitch.

FIG. 6 is a schematic representation of another embodiment of the present invention.

FIGS. 7, 8, 9 and 10 are schematic representations of still another embodiment of the present invention wherein FIG. 7 corresponds to FIG. 2, FIG. 8 corresponds to FIG. 3, FIG. 9 corresponds to FIG. 4, and FIG. 10 corresponds to FIG. 5.

Description of the Invention

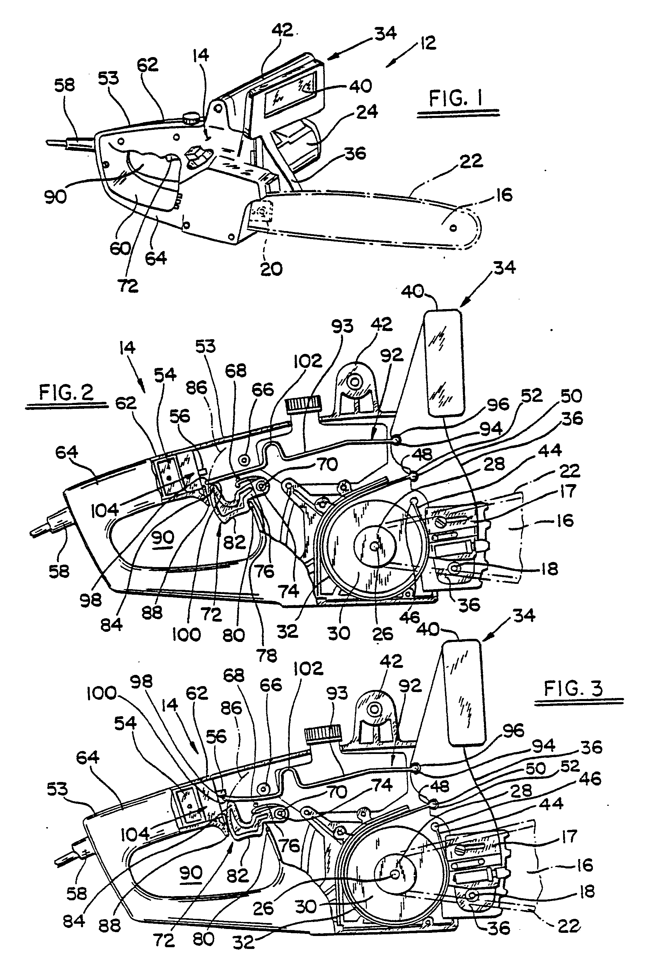

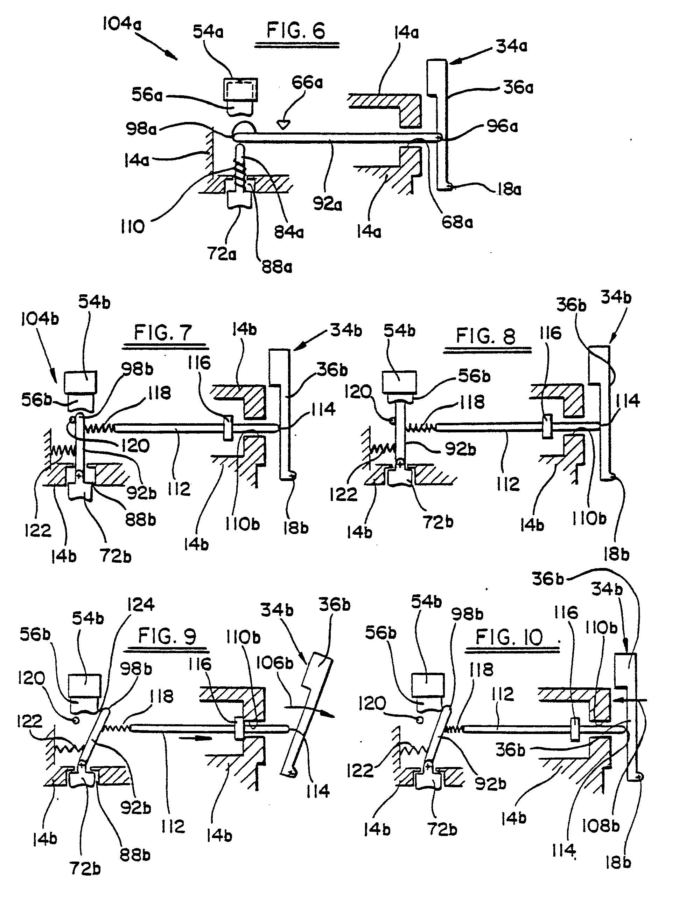

A portable power driven chain saw 12 is shown in FIG. 1 and embodies the present invention, wherein a preferred embodiment thereof is illustrated in FIGS. 2 through 6, and a second embodiment is illustrated in FIGS. 7 through 10.

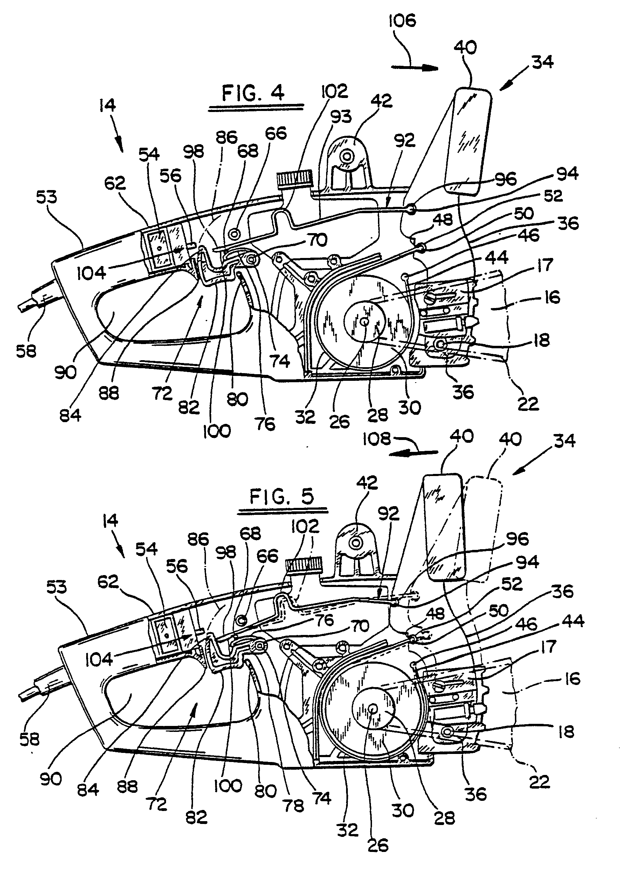

The chain saw 12 depicted in FIG. 1 has a housing 14 from which a guide bar 16 extends forwardly therefrom and is mounted to the housing 14 at a guide pad 17 shown in FIG. 3 by means of a fastener 20. An endless saw chain 22 is entrained on the guide bar 16 to be driven by a suitable motive means as, for example, an electric motor (not shown) housed in a motor casing 24 to drive an output shaft 26 carrying a drive sprocket 28 to which the saw chain 22 is connected as shown only in FIG. 2, and inboard thereof a brake drum 30 about which is disposed a brake band 32 of a brake system 34 best seen in Fig. 3. The braking system has a brake lever 36 pivotally connected to the housing 14 at 38 below the pad 17, and an upper transverse integral handguard 40 disposed forwardly of and parallel to a transverse top handle 42. The brake lever 36 responsive to the handguard 40 has two positions, a nonbraking position shown in FIGS. 1, 2 and 3, and a forwardly pivoted braking position shown in FIG. 4. The brake band 32 has one end 44 anchored at 46 to the housing in fixed position and the other end 48 affixed in a keyhole slot 50 by any suitable means as, for example, via an enlarged integral bead 52 so as to force the end 48 to be shifted with the lever 36 between the braking and nonbraking positions of the braking system 34. In the nonbraking position of FIG. 3 the brake band 32 is relaxed about and spaced from the brake drum 30 so as not to interfere with or stop the rotation of the drum 30. Upon actuation of the braking system 34, the handguard 40 and connected brake lever 36 will be pivoted at 18 forwardly as shown in FIG. 4 to clamp the brake band 32 about the brake drum 30 and abruptly stop the rotation of the brake drum 30 and drive sprocket 28 which is connected thereto. This results in stopping the saw chain 22. The drive sprocket 28 includes a suitable mechanical clutch (not shown) so that the drive shaft 26 can continue to rotate since application of the braking system 34 occurs at one point of the system and there is a lot of stored energy in the motive means which must be permitted to dissipate within the operative system. In the present, the chain saw 12 is powered by an electric motor which will have a very high motor stall current when the braking system 34 mechanically brakes the chain saw 12. The present invention eliminates the need to use known torque-sensitive clutches such as referred to in U.S. Specification No. 4121339, which are both costly and require calibration, which clutches allow drive sprocket 28 stall to occur without drive shaft 26 stall but have a fine line balance between acceptable overload conditions and unacceptable stall motor current.

The housing 14 has a rear handle 53 in which is mounted a microswitch 54 having a spring biased actuator button 56 normally biased in the "off" position as shown in FIG. 2. The switch 54 is connected to a source of electricity by an electric cord 58. Actuation of the switch 54 to the "on" position shown in FIG. 3 and described more fully hereinafter will energize the motor to drive the saw chain 22 through rotation of the drive shaft 26 and drive sprocket 28. During operation, the chain saw 12 can be controlled and best operated by the operator grasping both the rear handle 53 and the top handle 42. The handle 53 at the rear thereof is enclosed and bent around to a widened lower portion 60 which protects the operator's hand from beneath.

The housing 14 illustrated in FIG. 1 includes a support section 62 shown in FIGS. 2 and 3 and a cover section 64 shown in FIGS. 1 and 3. The support section 62 has molded posts or bosses at 66, 68 and 70 wherein upper post 66 serves as a fulcrum, midpost 68 serves as a rest and lower post 70 serves as a pivot for a trigger 72 having an aperture 74 journaled to the post 70 wherein a living hinge 76 engages the underside of the rest post 68 to urge the trigger to swing downwardly counterclockwise as shown in FIGS. 2 and 3 and cause its shoulder 78 to abut a housing stop 80. The trigger 72 extends from the shoulder 78 to form a finger portion 82 which the operator will depress into the housing the cause the transverse projection 84 formed at the end remote from the pivot 70 to swing an arc 86 which passes in noncontacting relationship to the switch 54 and its acutator button 56. The finger portion 82 of the trigger 72 extends downwardly from an aperture 88 in the housing 14 to be accessible in the opening 90 wherein it may be depressed by the operator's finger.

A link designated generally 92 is illustrated in FIGS. 2, 3, 4 and 5 and has an elongated body or member 93 made of semi-rigid material such as plastic which is strong yet flexible and will retain its shape yet be bendable to a limited extent. One end 94 has a bead formed thereon which is anchored in a keyhole slot 96 formed in the brake lever 36 above the keyhole slot 50 for the brake band 32. Thus, the end 94 is anchored to the brake lever 36 via the slot 96 or in any other suitable manner and will be shifted therewith along with the link 92 between the nonbraking lever position (FIGS. 2 and 3) and the braking position (FIG. 4). The opposite end 98 is free and has a pad 100 on the underside thereof. The body 93 has a bend 102 which may be termed a "steam pipe" bend in that it permits deflection of the link 92 without causing undue stress therein. The bend 102 is formed about midpoint of the body and lies between the brake lever 36 and the fulcrum 66. The body 93 is disposed between fulcrum 66 and the post 68. The free end 98 of the link 92, when the trigger 72 is released as shown in FIG. 2, rests upon the post 68 with the pad 100 extending beyond the upper tip of the projection 84 and lying a short distance from the switch 54, with the button disposed in superposition to and out of contact with the free end 98. The chain saw 12 is shown in FIG. 2 at rest wherein the switch 54 is off, the trigger 72 is released, and the braking system 34 is in the nonbraking position with the lever 36 in a substantially vertical position corresponding to its furthest counterclockwise position wherein the brake band 32 is relaxed about the drum 30, and the link 92 at its free end 98 is as close to touching the switch 54 as it can get.

A shut-off or control device, designated generally 104 of the preferred embodiment of the invention is shown in FIGS. 2 through 5 as including the link 92 which cooperates with the braking system 34 and coacts with the trigger 72 and the switch 54 to prevent chain saw 12 actuation with the brake on, or if the saw 12 is on will de-energize the motor upon braking. Also, if the saw 12 has been braked then the trigger 72 must be reset; e.g., released prior to restarting even if the brake is off.

The chain saw 12 has its electric motor actuated as illustrated in FIG. 3, upon the braking system 34 remaining deactivated and in the same position as shown in FIGS. 1 and 2, and the trigger 72 is depressed into the housing aperture 88. Thus, the trigger 72 pivots about the post 70 to proscribe an arc 86 at its projection 84 to raise the pad 100 end 98 of the link 92 into contact with the fulcrum 66 causing the link 92 to be bent thereabout producing a slight deflection but, more importantly, shortening the radius of movement of the link 92 so as to result in a positive motion thereof on the switch side of the fulcrum 66. The trigger 72 is fully depressed so that not only does the free end 98 of the link 92 contact the actuator button 56 but it will shift the button 56 from the lower "off" position of FIG. 2 to the raised "on" position of FIG. 3 where it will remain on to permit the switch to energize the motor and operate the saw 12, unless one of two conditions occur. The first condition is conventional and is the complete release of the trigger 72 to result in the switch 54 turning off. This restores the trigger 72, the link 92 and the button 56 to their respective positions shown in FIG. 2 where the button 56 is biased into its lower "off" position. This is the normal trigger 72 actuation from "off" (FIG. 2) to "on" (FIG. 3) to "off" (FIG. 2) again.

However, it is the second condition that provides the advantages of the present invention; and this condition is illustrated in FIG. 4 wherein the braking system 34 has been applied, and the lever 36 pivots at 18 in a clockwise direction as indicated by the arrow 106 to clamp the brake band 32 about the drum 30 producing an abrupt stop for the drum 30 and connected drive sprocket 28 whereby the saw chain 22 is likewise abruptly stopped. The forward shifting of the brake lever 36 results in pulling the link 92 a short distance to the right as viewed in FIG. 4 so as to shift the link 92 away from between the trigger projection 84 and the switch button 56. Once the free end 98 and integral pad 100 have slid rightwardly out of contact with the trigger projection 84 and the switch button 56, the button will return to its biased lower "off" position shutting down the electricity through the switch 54 and turning off the motor. It will be understood that though the application of the braking system 34 to brake and the shutting of the switch 54 occurs simultaneously, the brake being mechanical will take a finite period of time longer than the switch which is electrical. This will, of course, shut off the motor at the same time that the switch 54 is turning off, thus preventing an overload condition from arising or the build up of an unacceptable level of motor stall current.

Accordingly, as shown in FIG. 4, though the trigger 72 remains depressed and the projection 84 is in its raised position within the housing 14, the button 56 in its "off" position is below the upper tip of the projection 84. So long as the brake lever 36 remains forwardly in the brake position the actuation of the trigger 72 will not result in actuation of the switch 54 which will remain off.

In fact, as shown in FIG. 5 resetting of the trigger 72 is required once the braking system 34 has been applied. If either the chain saw motor was on and then shut off through the withdrawal of the link 92 from between the button 56 and the trigger 72 to restore the switch 54 to off, or if the chain saw motor was off to start with when the braking system 34 was applied, the result is that the link 92 has been shifted rightwardly out of the path of movement of the trigger projection 84 and, therefore, out of a possible path of movement of its free end 98 into contact with the button 56. In any event, if the trigger 72 is or remains depressed the projection 84 acts as a blocking finger, as illustrated in FIG. 5 so as to prevent restoration of the link 92. The brake lever 36 is pivoted from its forward braking position shown in dotted line representation to be swung counterclockwise as indicated by the arrow 108 to its nonbraking position which will result in relaxing the brake band 32 and unclamping it from the brake drum 30. In the solid line nonbraking position shown in FIG. 5 the link 92 has been shifted leftwardly but its free end 98 abuts the projection 84 to result in the link 92 bowing within the open interior space of the rear handle 53 wherein it may be angled to contact one or both of the posts 66 and 68 neither of which would interfere with the bowing thereof. In any event, the switch 54 is and remains off and the link 92 cannot be restored to its FIG. 2 position or, for that matter, into a position to contact the button 56 until the trigger is released to its FIG. 2 position which is termed herein "resetting". Thereafter so long as the braking system 34 remains off the trigger 72 through the intermediate positioning of the free end 98 (see FIG. 3) can be depressed or released to actuate the switch 54 between its "on" and "off" positions, respectively.

A second embodiment of the present invention is schematically depicted in FIG. 6 wherein like parts have been given the same reference characters as were used in the preferred embodiment except that a suffix "a" has been added. Also, the motion of the trigger 72a and switch actuator button 56a of the switch 54a are both linear. The shut-off or control device 104a is shown in FIG. 6 in a nonoperated state with the braking system 34a off. Only the brake lever 36a of system 34a is shown pivotable at 18a. It is understood that the lever 36a could be manually or automatically actuated responsive to desired system parameters and could be associated with any system, such as the braking system 34a. A link 92a is pivotally anchored at 96a to the lever 36a to be shiftable therewith. The link 92a is disposed in normally spaced relation to an aperture 110 of the housing 14a and is adaptable to rest on the lower surface 68a thereof when the free end 98a is disengaged from the projection 84a of the trigger 72a upon the lever 36a being pivoted clockwise resulting in the rightward shifting of the link 92a. The trigger 82a is disposed outwardly of the housing 14a at aperture 88a to be biased by a suitable spring 110 and will be depressed into the housing 14a to raise the free end 98a of the link 92a against a fulcrum 66a and cause it to pivot thereabout to engage the button 56a and push it into the switch 54a to activate the same. The button 56a is normally biased off and upon being depressed into the switch will turn the switch on. It is apparent in the second embodiment that so long as the lever 36a remains unoperated that depression and release of the trigger 72a will produce a conventional on-off operation of the switch via the link 92a and contact button 56a to power any electrical device (not shown) to which the switch 54a is in line. However, as was the case in the preferred embodiment, once the lever 36a is pivoted, the link 92a will be shifted rightwardly as viewed in FIG. 6 to remove its free end 98a from between the projection 98a and button 56a as as to turn the switch 54a off if it was on, or to prevent its being turned on in the first place. Once again the device 104a must be reset by release of the trigger 72a to permit the link 92a to be replaced between the trigger projection 84a and the switch 54a.

A third embodiment of the present invention is schematically illustrated in FIGS. 7 through 10 wherein like parts have been given the same reference character as were used in the preferred embodiment except that a suffix "b" has been added. Also, the motion of the trigger 72b and switch actuator button 56b of the switch 54b are both linear. The shut-off or control device 104b is shown in FIG. 7 in a nonoperated state with the braking system 34b off. Only the brake lever 36b of system 34b is shown pivotable at 18b. As was the case with the FIG. 6 embodiment, it is understood that the lever 36b could be manually or automatically actuated responsive to desired system parameters and could be associated with any system, such as the braking system 34b. A second link or holding member 112 contacts the lever 36b at 114 to be shiftable responsive thereto, as described more fully hereinafter. The second link 112 is disposed in normally spaced relation through an aperture 110b of the housing 14b. The second link 112 has a holding collar 116 spaced from its right end inboard of the aperture 110b and held in spaced relation therewith by the right end thereof contacting the lever 36b at 96 (see FIGS. 7 and 8), but on clockwise pivoting indicated by the arrow 106b the second link 112 to be urged rightwardly by the compression spring 118 to cause the holding collar 116 to engage the housing aperture 110b (see FIG. 9) to limit its rightward travel. Resetting of the lever 36b by its being pivoted counterclockwise as indicated by the arrow 108b will restore the position of the second link 112 by causing it to be shifted leftwardly to again place the collar 116 away from the housing 14b. A primary or first link 92b is intermediately engaged by the end of the spring 118 remote from the second link 112 so as to sandwich the spring 118 therebetween. The lower end of the link 92b is pivotally connected to the trigger 72b. A stop post 120 is positioned below the actuator button 56b on the left side of the link 92b just below its free end 98b. A second spring 122 is disposed between the housing 14b and the left side of the link 92b below the post 120 and right side spring 118. The second spring 122 urges the link 92b to pivot clockwise, but this is prevented as shown in FIGS. 7 and 8 so long as the lever 36b remains in its vertical nonactuated position.

The trigger 72b shown in FIG. 7, which corresponds to FIG. 2, is disposed outwardly of the housing aperture 88b, with the link 92b vertically disposed at rest against the post 120 and having its free end 98b spaced from the button 56b. The lever 36b is in its raised first position which is assumed to be nonoperative. The spring 118 slightly overbalances the spring 122 so as to urge the link 92b to remain against the post 122.

Whenever it is desired to actuate the switch 54b and the electric appliance or motor (not shown), which the switch 54b controls, the trigger 72b is depressed as illustrated in FIG. 8, corresponding to FIG. 3, to raise the link 92b and cause its free end 98b to abut and force the button 56b to shift from the "off" position to the "on" position for the switch 54b. The link 92b is shiftable relative the post 120 and springs 118 and 122. By simply releasing the trigger 72b the device 104b will be returned to its FIG. 7 position wherein the switch 54b is off.

The button 56b is normally biased off and upon being depressed into the switch 54b (see FIG. 8) will turn the switch on. It is apparent in the third embodiment that so long as the lever 36b remains unoperated that depression and release of the trigger 72b will produce a conventional on-off operation of the switch via the link 92b and contact button 56b to power any electrical device (not shown) to which the switch 54b is in line. However, as was the case in the preferred embodiment, once the lever 36b is pivoted as shown in FIG. 9, the link 92b also will be pivoted rightwardly as viewed in FIG. 9 to remove its free end 98b from a path of motion with the button 56b by the spring 122 urging the link 92b to rotate counterclockwise and assume a position to the right of and in spaced relation to the button 56b whose lower surface will be vertically below the upper tip of the free end 98b. The open distance 124 between the button 56b and the link 92b may be small but is sufficient so as to permit quick and easy disengagement therebetween. Accordingly, shifting of the lever 36b will result in an instantaneous chain of events causing the switch 54b to its "off" position if it was on or to prevent its being turn on in the first place.

Once again the device 104b must be reset by release of the trigger 72b to permit the link 92b to be restored between the trigger projection 84b and the switch 54b. This is depicted in FIG. 10, corresponding to FIG. 5, wherein the lever 36b is returned to its FIG. 7 position that at contact 114 shifts the second link 112 leftwardly to cause the free end 98b of the link 92b to pivot against the lower button 56b that acts to block such motion as being contrary to its designed vertical path of travel. The result is that the spring 118 is compressed, but the link 92b cannot be restored to its FIG. 7 position until the trigger 72b is reset; e.g., released to its FIG. 7 position. This prevents accidental actuation of the switch 54b after the lever 36b is tripped subsequent to the trigger 72b being depressed.

It will be understood that various changes in the details, materials, arrangements of parts and operating conditions which have been herein described and illustrated in order to explain the nature of the invention may be made by those skilled in the art within the principles and scope of the invention.

The reference numerals in parenthesis in the claims should not be regarded as in any way restricting the scope of the claims.

**Claims**

1. A control device (104, 104a, 104b) for a switch (54, 54a, 54b) mounted in a housing (14), comprising a trigger (72, 72a, 72b) displaceably mounted in the housing (14, 14a, 14b) for actuating the switch (54, 54a, 54b), shut off means (34, 34a, 34b and 92, 92a, 92b) operable to deactuate the switch (54, 54a, 54b) and to prevent reactuation of the switch (54, 54a, 54b) without release and resetting of the trigger (72, 72a, 72b) characterised in that:

(a) the trigger (72, 72a, 72b) is shiftably mounted in the housing (14, 14a, 14b) remote from the switch (54, 54a, 54b),

(b) the shut-off means includes a link (92, 92a, 92b) operatively associated to be selectively movable by the trigger (72, 72a, 72b) to cause the link (92, 92a, 92b) to be shifted along a path toward the switch (54, 54a, 54b),

(c) the shut-off means also includes a means (34, 34a, 34b) connected to the link (92, 92a, 92b) having a rest position and a removal position,

(d) the means (34, 34a, 34b) in the rest position permitting the link (92, 92a, 92b) to be shifted along a path to engage the switch (54, 54a, 54b), and

(e) the means (34, 34a, 34b) in the removal position preventing the link (92, 92a, 92b) from engaging the switch (54, 54a, 54b) by removing the link (92, 92a, 92b) from the path of the switch (54, 54a, 54b).

2. A device as claimed in claim 1, wherein:

(a) the means (34, 34a, 34b) includes a brake (36, 36a, 36b) to which the link (92, 92a, 92b) moves responsively.

3. A device as claimed in claim 1 or 2, wherein:

(a) the link (92b) is pivotally connected to the trigger (72b),

(b) the brake (36b) shiftable to cause the link (92b) to be pivoted away from and out of engagement with the switch (54b), and

(c) spring means (122) biasing the link (92b) to move responsive the brake (36b).

4. A device as claimed in claim 3, wherein:

(a) a holding member (112) is biased between the link (92b) and the brake (36b) to cause the link (92b) to remain in a path of motion toward the switch (54b), and

(b) the brake (36b) is applied to trip the holding member (112) and deflect the link (92b) away from its path of motion toward the switch (54b), causing the switch (54b) to be biased off.

5. A device as claimed in claim 4 wherein:

(a) the switch (54b) is in its off position blocking the link (92b) from returning along its path of motion toward the switch (54b) until the trigger (72b) is released even after release of the brake (36b).

6. A shut-off device (104, 104a, 104b) to control the operation of a motive means which powers a chain (12) having a housing (14, 14a, 14b) with a brake means (34, 34a, 34b) operative to stop the chain saw (12) and a switch (54, 54a, 54b) mounted in the housing (14, 14a, 14b) and a displaceable switch-contacting member urgeable against the switch for activating switch; characterised by the feature that the shut-off device comprises a trigger (72, 72a, 72b) which is mounted in the housing (14, 14a, 14b) to be shiftable into non-intersecting relationship with the switch and actuable to activate said switch (54, 54a, 54b) which is biased "off" and shiftable to "on"; and link means operable to permit deactivation of the switch (54, 54a, 54b); and including a link (92, 92a, 92b) as switch contacting member which is acted upon by the brake means (34, 34a, 34b) to be shifted therewith from between the switch (54, 54a, 54b) and trigger (72, 72a, 72b); said link (92, 92a, 92b) normally permitting trigger actuation of the switch (54, 54a, 54b) and on actuation of the brake means (34, 34a, 34b) said link (92, 92a, 92b) being at least partially removed from between the switch (54, 54a) and the trigger (72, 72a) to cause the switch (54, 54a) to be restored to its biased off position.

7. A device as claimed in claim 6, characterised by the feature that:

(a) the link (92, 92a) is elongated to extend from the brake connection (96, 96a) to adjacent the switch (54, 54a) and the trigger (72, 72a)

(b) the brake means (34, 34a) is shiftable a predetermined distance between stopping and releasing the chain saw (12), and

(c) the link (92, 92a) shifting transverse to the trigger motion whereby with the brake means (34, 34a) released the link (92, 92a) is intermediate the switch (54, 54a) and the trigger (72, 72a), and with the brake means (34, 34a) stopped the link (92, 92a) shifted a corresponding distance away from between the switch (54, 54a) and the trigger (72, 72a).

8. A device as claimed in claim 7, wherein:

(a) the trigger (72, 72a) has a projection (84, 84a),

(b) the projection (84, 84a) engages the link (92, 92a) at its free end (98, 98a) with the link (92, 92a) between the switch (54, 54a) and the trigger (72, 72a), and

(c) the link (92, 92a) being withdrawn from the projection (84, 84a) upon the brake means (34, 34a) stopping the chain saw (12) whereby the projection (84, 84a) remains adjacent to and in noncontacting relationship with the switch (54, 54a) to prevent intermediate placement of the link (92, 92a) so long as the trigger (72, 72a) is depressed whether the brake means (34, 34a) stops or releases the chain saw (12).

9. A device as claimed in claim 8, wherein:

(a) the link (92, 92a) has at least one bend (102) therein to permit deflection thereof.

10. A device as claimed in claim 9, characterised in that:

(a) the trigger (72) is pivotable in the housing (14) and biased in released position,

(b) the trigger (72) is depressible to proscribe an arc (86) at its projection out of contact with the switch (54), and

(c) the link (92) is positionable between the switch (54) and the projection (84) with the trigger (72) released.

11. A device as claimed in claim 10, wherein:

(a) a fulcrum (66) is formed in the housing above the projection, and

(b) trigger (72) depression causes the projection (84) to engage and to bend the link (92) at the fulcrum (66) to proscribe a short arc in contact with the switch (54), to shift the switch (54) to on.

12. A device as claimed in claim 11, wherein:

(a) a post (68) is provided in the housing (14) below the fulcrum (66) and above the projection (84),

(b) the link (92) resting upon the post (68) whenever the brake means (34) shifts to link (92) away from the switch (54) and the trigger (72), and

(c) the post (68) guides the link (92) above the projection (84) upon release of the brake means (36) and release of the trigger.

13. A shut-off device (104) to control the operation of a motive means which powers a chain saw (12) having a housing (14) with brake means (34) operative to stop the chain saw (12) and a switch (54) mounted in the housing (14) and a displaceable switch contacting member urgeable against the switch for activating the switch; characterised by the feature that the shut-off device comprises a trigger (72) which is pivotally mounted in the housing (14) and swingable in an arc (86) with non-contacting relationship with respect to an actuator button (56) of the switch (54) and said trigger being actuable to activate said switch (54) which actuator button (56) is biased to "off" and shiftable to "on"; and link means operable to permit deactivation of the switch (54) and including a link (92) as switch contacting member interconnectable between the button (56) and the trigger (72), and the link (92) being anchored to the brake means (34) and shiftable therewith to place the link (92) between the button (56) and the trigger (72) in interconnect therebetween, and to remove the link (92) from interconnection therebetween.

14. A device as claimed in claim 13, wherein:

(a) the link (92) is shiftable by the brake means (34) into and out of the swingable arc (86) of the trigger (72) to permit interconnection and to prevent interconnection between the trigger (72) and the switch (54).

15. A device as claimed in claim 14, wherein:

(a) a projection (84) is formed on the trigger (72) to swing in an arc adjacent to and out of contact with the button (56), and

(b) the projection (84) to contact the link (92) when the link (92) is shifted into said arc (86) to permit the link (92) to contact the button (56) and activate the switch (54) responsive to movement of the trigger (72).

16. A device as claimed in claim 15, wherein:

(a) the projection (84) to prevent the link (92) to be shifted back into the arc (86) once the link (92) is withdrawn therefrom and the projection (84) released from blocking position upon release of the trigger (72).

17. A device as claimed in any of claims 13 to 16, wherein:

(a) the link (92) has a bend (102) to permit deflection thereof.

18. A device as claimed in any of claims 13 to 17, wherein:

(a) the link (92) is semi-rigid,

(b) the fulcrum (66) in the housing (14) is formed above the link (92), and

(c) the link (92) to engage the fulcrum (66) on being contacted by the trigger (72) whereby the link (92) will be pivoted at its free end (98) to shift the button (56) on.

19. A shut-off device (104, 104a, 104b) for a motive means comprising a first member (56, 56a, 56b) as switching means for switching the motive means on and off; a second member (72, 72a, 72b) displaceably mounted for actuating the first member (56, 56a, 56b), a third member (34, 34a, 34b) operable to displace or permit displacement of a fourth member (92, 92a, 92b) which is displaceable with the third member (34, 34a, 34b) to deactuate the first member (56, 56a, 56b) and to prevent reactuation of the first member (56, 56a, 56b) without release and resetting of the second member (72, 72a, 72b), characterised by the feature that:

(a) the first member (56, 56a, 56b) is normally biased in one position;

(b) the second member (72, 72a, 72b) is shiftable toward and away from the first member (54, 54a, 54b) in noncontacting relationship thereto;

(c) the third member (34, 34a, 34b) is remote from the first and second members (54, 54a, 54b and 72, 72a, 72b) and has a nearer position and a farther position relative the first and second members (54, 54a, 54b and 72, 72a, 72b), and

(d) the fourth member (92, 92a, 92b) connected to the third member (34, 34a, 34b) and with the third member in its nearer position the fourth member (92, 92a, 92b) disposed between the first and second members to permit intercontact therebetween whereby the motive means is switched on and off, and with the third member (34, 34a, 34b) in its farther position the fourth member (92, 92a, 92b) is withdrawn to prevent intercontact between the first (54, 54a, 54b) and second member (72, 72a, 72b) and withdrawn from intercontact therebetween.

20. A device as claimed in claim 19, wherein:

(a) the fourth member (92) has a contact pad (100) to enhance said intercontact,

(b) the fourth member is anchored to the third member to be shifted therewith, and

(c) the fourth member has a bend (102) therein to permit deflection therein.

21. A device as claimed in claim 19, wherein:

(a) the second member (72) is pivotable in an arc (86),

(b) a projection (84) is formed on the second member (72) to swing an arc in noncontacting relationship with the first member (54),

(c) the projection (84) contacting the fourth member (92) when the fourth member (92) is disposed between the first and second members (54 and 72), and

(d) said projection (84) preventing the fourth member (92) from interconnection between the first and second members (54 and 72) once withdrawn therefrom until the second member (72) has been shifted away from the first member (54).

**Revendications**

1. Dispositif de commande (104, 104a, 104b) pour un interrupteur (54, 54a, 54b) monté dans un carter (14), comportant une détente (72, 72a, 72b) montée de façon à être déplaçable dans le carter (14, 14a, 14b) pour l'actionnement de l'interrupteur (54, 54a, 54b), des moyens de débranchement (34, 34a, 34b et 92, 92a, 92b) pouvant être actionnés de manière à désactiver l'interrupteur (54, 54a, 54b) et empêcher un nouvel actionnement de l'interrupteur (54, 54a, 54b) sans libération et remise à l'état initial de la détente (72, 72a, 72b), caractérisé en ce que:

(a) la détente (72, 72a, 72b) est montée de manière à être déplaçable dans le carter (14, 14a, 14b), à distance de l'interrupteur (54, 54a, 54b),

(b) les moyens de débranchement comprennent une tringle de liaison (92, 92a, 92b) associée de façon opérationnelle de manière à être déplaçable de façon sélective par la détente (72, 72a, 72b) de sorte que cette tringle de liaison (92, 92a, 92b) est déplacée le long d'une trajectoire en direction de l'interrupteur (54, 54a, 54b),

(c) les moyens de débranchement comprennent également des moyens (34, 34a, 34b) raccordés à la tringle de liaison (92, 92a, 92b) comportant une position d'appui et une position de retrait,

(d) les moyens (34, 34a, 34b) permettant, dans la position d'appui, un déplacement de la tringle de liaison (92, 92a, 92b) le long d'une trajectoire de manière qu'elle contacte l'interrupteur (54, 54a, 54b) et

(e) des moyens (34, 34a, 34b) empêchant, dans la position de retrait, la venue de la tringle de liaison (92, 92a, 92b) en contact avec l'interrupteur (54, 54a, 54b) par suite du retrait de la tringle (92, 92a, 92b) hors de la trajectoire de l'interrupteur (54, 54a, 54b).

2. Dispositif selon la revendication 1, dans lequel:

(a) les moyens (34, 34a, 34b) comportent un frein (36, 36a, 36b), en réponse à l'action duquel la tringle de liaison (92, 92a, 92b) se déplace.

3. Dispositif selon la revendication 1 ou 2, dans lequel:

(a) la tringle de liaison (92a) est raccordée avec possibilité de rotation à la détente (72b),

(b) le frein (36b) est déplaçable de manière à écarter par pivotement la tringle de liaison (92b) de l'interrupteur (54b) et à supprimer le contact de la tringle avec cet interrupteur, et

(c) des moyens en forme de ressort (122) sollicitant la tringle de liaison (92b) pour qu'elle se déplace en réponse à l'action du frein (36b).

4. Dispositif selon la revendication 3, dans lequel:

(a) un organe de support (112 est sollicité, entre la tringle de liaison (92b) et le frein (36b) de manière à obliger la tringle de liaison (92b) à rester sur une trajectoire de déplacement en direction de l'interrupteur (54b), et

(b) le frein (36b) est monté de manière à libérer l'organe de maintien (112) et à écarter la tringle de liaison (92b) de sa trajectoire de déplacement en direction de l'interrupteur (54b), ce qui provoque le déclenchement de l'interrupteur (54b).

5. Dispositif selon la revendication 4, dans lequel:

(a) dans sa position débranchée, l'interrupteur (54b) empêche la tringle de liaison (92b) de revenir le long de sa trajectoire de déplacement en direction de l'interrupteur (54b) avant que la détecte (72b) soit relâchée, même après le desserrage du frein (36b).

6. Dispositif de débranchement (104, 104a, 104b) servant à commander le fonctionnement de moyens moteurs qui actionnent une tronçonneuse (12) comportant un carter (14, 14a, 14b) muni de moyens formant frein (34, 34a, 34b) aptes à fonctionner de manière à arrêter la tronçonneuse (12), et un interrupteur (54, 54a, 54b) monté dans le carter (14, 14a, 14b) et un organe déplaçable, destiné à contacter l'interrupteur et pouvant être repoussé contre ce dernier pour l'activer; caractérisé par le fait que le dispositif de débranchement comporte une détente (72, 72a, 72b), qui est montée dans le carter (14, 14a, 14b) de manière à pouvoir être amenée dans une position ne contactant pas l'interrupteur et pouvant être actionnée de manière à activer ledit interrupteur (54, 54a, 54b), qui est sollicité dans l'état "débranché" et peut être amené dans l'état "branché"; et des moyens en forme de tringle de liaison pouvant être actionnés de manière à permettre la désactivation de l'interrupteur (54, 54a, 54b); et comportant une tringle de liaison (92, 92a, 92b) servant d'organe contactant l'interrupteur et qui est actionnée par les moyens formant frein (34, 34a, 34b) de manière à être déplacée avec ces derniers depuis une position située entre l'interrupteur (54, 54a, 54b) et la détente (72, 72a, 72b); ladite tringle de liaison (92, 92a, 92b) permettant normalement l'actionnement de l'interrupteur (54, 54a, 54b) au moyen de la détente et, lors de l'actionnement des moyens formant frein (34, 34a, 34b), ladite tringle de liaison (92, 92a, 92b) étant au moins partiellement retirée de l'espace situé entre l'interrupteur (54, 54a) et la détente (72, 72a) de manière à ramener l'interrupteur (54, 54a) dans sa position débranchée.

7. Dispositif selon la revendication 6, caractérisé par le fait que:

(a) la tringle de liaison (92, 92a) est allongée de manière à s'étendre depuis l'organe (96, 96a) de liaison du frein jusqu'au voisinage de l'interrupteur (54, 54a) et de la détente (72, 72a),

(b) les moyens formant frein (34, 34a) peuvent être déplacés sur une distance prédéterminée entre le débranchement et la libération de la tronçonneuse (12), et

(c) la tringle de liaison (92, 92a) se déplaçant transversalement par rapport au mouvement de la détente, ce qui a pour effet que, lorsque les moyens formant frein (34, 34a) sont desserrés, la tringle de liaison (92, 92a) est dans une position intermédiaire entre l'interrupteur (54, 54a) et la détente (72, 72a), et que, lorsque les moyens formant frein (34, 34a) sont bloqués, la tringle de liaison (92, 92a) est écartée, sur une distance correspondante, de l'espace compris entre l'interrupteur (54, 54a) et la détente (72, 72a).

8. Dispositif selon la revendication 7, dans lequel:

(a) la détente (72, 72a) comporte une partie saillante (84, 84a),

(b) la partie saillante (84, 84a) contacte la tringle de liaison (92, 92a) au niveau de sont extrémité libre (98, 98a), lorsque la tringle de liaison (92, 92a) est située entre l'interrupteur (54, 54a) et la détente (72, 72a), et

(c) la tringle de liaison (92, 92a) étant écartée de la partie saillante (84, 84a) lorsque les moyens formant frein (34, 34a) arrêtent la tronçonneuse (12), ce qui a pour effet que la partie saillante (84, 84a) reste voisine de l'interrupteur (54, 54a), sans être en contact avec ce dernier, de manière à empêcher un positionnement intermédiaire de la tringle de liaison (92, 92a) tant que la détente (72, 72a) est enfoncée, que les moyens formant frein (34, 34a) bloquent ou libèrent la tronçonneuse (12).

9. Dispositif selon la revendication 8, dans lequel:

(a) la tringle de liaison (92, 92a) comporte au moins un coude (102) permettant son fléchissement.

10. Dispositif selon la revendication 9, caractérisé en ce que:

(a) la détente (72) peut pivoter dans le carter (14) et est sollicitée dans la position relâchée,

(b) la détente (72) peut être enfoncée de telle sorte que sa partie saillante se déplace par un arc (86) en étant hors de contact de l'interrupteur (54), et

(c) la tringle de liaison (92) peut être positionnée entre l'interrupteur (54) et la partie saillante (84), lorsque la détente (72) est relâchée.

11. Dispositif selon la revendication 10, dans lequel:

(a) un pivot (66) est ménagé dans le carter au-dessus de la partie saillante, et

(b) l'enfoncement de la détente (72) amène la partie saillante (84) à contacter et à faire fléchir la tringle de liaison (92) au niveau du pivot (66) de telle sorte qu'elle suit un petit arc en étant en contact avec l'interrupteur (54), de manière à placer l'interrupteur (54) à l'état branché.

12. Dispositif selon la revendication 11, dans lequel:

(a) un téton (68) est prévu dans le carter (14) au-dessous du pivot (66) et au-dessus de la partie saillante (84),

(b) la tringle de liaison (92) est en appui sur le tèton (68) chaque fois que les moyens formant frein (64) se déplacent en direction de la tringle de liaison (92) en s'écartant de l'interrupteur (54) et de la détente (72), et

(c) le téton (68) guide la tringle de liaison (92) au-dessus de la partie saillante (84) lors du desserrage des moyens formant frein (36) et du relâchement de la détente.

13. Dispositif de débranchement (104) servant à commander le fonctionnement de moyens moteurs qui entraînent une tronçonneuse (12) comportant un carter (14) muni de moyens formant frein (34) pouvant agir de manière à arrêter la tronçonneuse (12) et un interrupteur (54) monté dans le carter (14) et un organe déplaçable, qui contacte l'interrupteur et peut être repoussé contre ce dernier afin de l'actionner; caractérisé par le fait que le dispositif de débranchement comporte une détente (72) qui est montée de façon à pouvoir pivoter dans le carter (14) et peut osciller suivant un arc (86) sans être en contact avec un bouton d'actionnement (56) de l'interrupteur (54), et qui peut être actionné de manière à activer ledit interrupteur (54), ledit bouton d'actionnement (56) étant sollicité dans la position "arrêt" et pouvant être amené dans la position "marche"; et des moyens formant tringle de liaison (92) servant d'organe venant en contact avec l'interrupteur et pouvant être interconnecté entre le bouton (56) et la détente (72), cette tringle de liaison (92) étant accrochée aux moyens formant frein (34) et pouvant être déplacée avec ces moyens de telle sorte que la tringle de liaison peut être placée entre le bouton (56) et la détente (72) de manière à les interconnecter, et peut être retirée de manière à supprimer cette interconnexion.

14. Dispositif selon la revendication 13, dans lequel:

(a) la tringle de liaison (92) peut être déplacée par les moyens formant frein (34) pour être amenée dans et hors de l'arc d'oscillation (86) de la détente (72) de manière à établir une interconnexion et à supprimer cette interconnexion entre la détente (72) et l'interrupteur (54).

15. Dispositif selon la revendication 14, dans lequel:

(a) une partie saillante (84) est formée sur la détente (72) de manière à osciller selon un arc voisin du bouton (56), sans être en contact avec ce dernier, et

(b) la partie saillante (84) devant venir en contact avec la tringle de liaison (92) lorsque cette dernière est amenée sur ledit arc (86) afin de permettre à la tringle de liaison (92) de contacter le bouton (56) et d'actionner l'interrupteur (54) en réponse au déplacement de la détente (72).

16. Dispositif selon la revendication 15, dans lequel:

(a) la partie saillante (84) a pour but d'empêcher la tringle de liaison (92) d'être ramenée en arrière sur l'arc (86) une fois qu'elle est écartée de ce dernier, et la partie saillante (95) est libérée de la position de blocage lors du relâchement de la détente (72).

17. Dispositif selon l'une quelconque des revendications 13 à 16, dans lequel:

(a) la tringle de liaison (92) comporte un coude (102) permettant une flexion de la tringle.

18. Dispositif selon l'une quelconque des revendications 13 à 17, dans lequel:

(a) la tringle de liaison (92) est semi-rigide,

(b) le pivot (66) situé dans le carter (14) est disposé au-dessus de la tringle de liaison (92), et

(c) la tringle de liaison (92) est destinée à contacter le pivot (66) lorsqu'elle est contactée par la détente (72), ce qui a pour effet que la tringle de liaison (92) pivoté au niveau de son extrémité libre (98) de manière à placer le bouton (56) à l'état branché.

19. Dispositif de débranchement (104, 104a, 104b) prévu pour des moyens moteurs comprenant un premier organe (56, 56a, 56b) formant moyen de commutation pour placer les moyens moteurs à l'état branché et débranché; un second organe (72, 72a, 72b) monté de façon à être déplaçable en vue d'actionner le premier organe (56, 56a, 56b), un troisième organe (34, 34a, 34b) pouvant agir de manière à déplacer ou à permettre le déplacement d'un quatrième organe (92, 92a, 92b) qui est déplaçable avec le troisième organe (34, 34a, 34b) de manière à désactiver le premier organe (56, 56a, 56b) et à empêcher un nouvel actionnement de ce premier organe (56, 56a, 56b) sans libération et remise à l'état initial du second organe (72, 72a, 72b), caractérisé par le fait que:

(a) le premier organe (56, 56a, 56b) est normalement sollicité dans une position;

(b) le second organe (72, 72a, 72b) peut être rapprochée et écarté du premier organe (54, 54a, 54b), sans être placé en contact avec ce dernier;

(c) le troisième organe (34, 34a, 34b) est situé à distance des premier et second organes (54, 54a, 54b et 72, 72a, 72b) et possède une position proche et une position éloignée par rapport aux premier et second organes (54, 54a, 54b et 72, 72a, 72b), et

(d) le quatrième organe (92, 92a, 92b) est raccordé au troisième organe (34, 34a, 34b) et, le troisième organe étant dans sa position proche, le quatrième organe (92, 92a, 92b) est disposé entre les premier et second organes de manière à permettre un contact réciproque entre ces organes, ce qui a pour effet que les moyens moteurs sont branchés et débranchés, et, lorsque le troisième organe (34, 34a, 34b) est dans sa position éloignée, le quatrième organe (92, 92a, 92b) est retiré de manière à empêcher un contact réciproque entre le premier organe (54, 54a, 54b) et le second organe (72, 72a, 72b) et n'établit plus de contact réciproque entre ces organes.

20. Dispositif selon la revendication 19, dans lequel:

(a) le quatrième organe (92) comporte un plot de contact (100) servant à améliorer ledit contact réciproque,

(b) le quatrième organe est accroché au troisième organe de manière à être déplacé avec ce dernier, et

(c) le quatrième organe comporte un coude (102), qui lui permet de fléchir.

21. Dispositif selon la revendication 19, dans lequel:

(a) la second organe (72) peut pivoter suivant un arc (86),

(b) une partie saillante (84) est formée sur le second organe (72) de manière à osciller suivant un arc sans être en contact avec le premier organe (54),

(c) la partie saillante (84) contactant le quatrième organe (92) lorsque ce quatrième organe (92) est disposé entre les premier et second organes (54 et 72), et

(d) ladite partie saillante (84) empêchant un quatrième organe (92) d'être interconnecté entre les premier et second organes (54 et 72) une fois qu'elle en est retirée, jusqu'à ce que le second organe (72) ait été écarté du premier organe (59).

**Patentansprüche**

1. Eine Steuervorrichtung (104, 104a, 104b) für einen in einem Gehäuse (14) angebrachten Schalter (54, 54a, 54b), welche einen verschiebbar in dem Gehäuse (14, 14a, 14b) angebrachten Drükker (72, 72a, 72b) zur Betätigung des Schalters (54, 54a, 54b) und Sperrmittel (34, 34a, 34b und 92, 92a, 92b) aufweist, die zur Inaktivierung des Schalters (54, 54a, 54b) und zur Verhinderung einer Wiederbetätigung des Schalters (54, 54a, 54b) ohne Lösen und Rücksetzen des Drückers (72, 72a, 72b) dienen, dadurch gekennzeichnet, daß

(a) der Drücker (72, 72a, 72b) verschiebbar in dem Gehäuse (14, 14a, 14b) entfernt von dem Schalter (54, 54a, 54b) angebracht ist,

(b) die Sperrmittel ein Verbindungsteil (92, 92a, 92b) enthalten, das wirksam angeschlossen ist, um wahlweise durch den Drücker (72, 72a, 72b) bewegbar zu sein, durch den das Verbindungsteil (92, 92a, 92b) entlang eines Weges zu dem Schalter (54, 54a, 54b) verschoben wird,

(c) die Sperrmittel ebenfalls mit dem Verbindungsteil (92, 92a, 92b) verbundene Mittel (34, 34a, 34b) enthalten, die eine Ruhestellung und eine Ausziehstellung einnehmen,

(d) wobei die Mittel (34, 34a, 34b) in der Ruhestellung dem Verbindungsteil (92, 92a, 92b) erlauben, entlang eines Weges verschoben zu werden, um mit dem Schalter (54, 54a, 54b) in Eingriff zu gelangen, und

(e) die Mittel (34, 34a, 34b) in der Ausziehstellung das Verbindungsteil (92, 92a, 92b) am Eingriff mit dem Schalter (54, 54a, 54b) hindern, indem sie das Verbindungsteil (92, 92a, 92b) vom Weg des Schalters (54, 54a, 54b) wegziehen.

2. Eine Vorrichtung nach Anspruch 1, in der:

(a) die Mittel (34, 34a, 34b) eine Bremse (36, 36a, 36b) enthalten, in Abhängigkeit von der sich das Verbindungsteil (92, 92a, 92b) bewegt.

3. Eine Vorrichtung nach Anspruch 1 oder 2, in der:

(a) das Verbindungsteil (92b) mit dem Drücker (72b) gelenkig verbunden ist,

(b) die Bremse (36b) verschiebbar ist, um zu bewirken, daß das Verbindungsteil (92b) aus dem Eingriff mit dem Schalter (54b) wegverschwenkt wird und

(c) Federmittel (122) das Verbindungsteil (92b) vorspannen, um sich in Abhängigkeit von der Bremse (36b) zu bewegen.

4. Eine Vorrichtung nach Anspruch 3, in der:

(a) ein Halteteil (112) zwischen dem Verbindungsteil (92b) und der Bremse (36b) vorgespannt ist, um zu bewirken, daß das Verbindungsteil (92b) in einem Bewegungsweg zu dem Schalter (54b) bleibt und

(b) die Bremse (36b) zum Auslösen des Halteteils (112) und zum Auslenken des Verbindungsteils (92b) aus seinen Bewegungsweg zu dem Schalter (54b) benutzt wird, wodurch der Schalter (54b) entspannt wird.

5. Eine Vorrichtung nach Anspruch 4, in der:

(a) der Schalter (54b) in seiner Ausschaltstellung das Verbindungsteil (92b) an einer rückwärts gerichteten Bewegung entlang seines Bewegungsweges zu dem Schalter (54b) hindert, bis der Drücker (72b) gelöst ist, und zwar eben nach dem Lösen der Bremse (36b).

6. Eine Sperrvorrichtung (104, 14a, 104b) zur Steuerung des Betriebes eines Antriebsmittels, das eine Kettensäge (12) antreibt, die ein Gehäuse (14, 14a, 14b) mit Bremsmitteln (34, 34a, 34b) zum Stoppen der Kettensäge (12) und ein in dem Gehäuse (14, 14a, 14b) angebrachten Schalter (54, 54a, 54b) und ein verschiebbares, den Schalter berührendes Teil aufweist, das zur Aktivierung des Schalters gegen den Schalter drückbar ist; gekennzeichnet durch das Merkmal, daß die Sperrvorrichtung einen Drücker (72, 72a, 72b), der in dem Gehäuse (14, 14a, 14b) angebracht ist, um in eine nicht durchkreuzende Beziehung mit dem Schalter verschiebbar und zur Aktivierung des Schalters (54, 54a, 54b) betätigbar zu sein, der in eine Ausschaltstellung vorgespannt und in eine Einschaltstellung verschiebbar ist; und Verbindungsmittel aufweist, die dazu dienen, eine Inaktivierung des Schalters (54, 54a, 54b) zu ermöglichen und ein Verbindungsteil (92, 92a, 92b) als ein den Schalter berührendes Teil enthalten, auf das durch die Bremsmittel (34, 34a, 34b) eingewirkt wird, um mit diesen zwischen dem Schalter (54, 54a, 54b) und dem Drücker (72, 72a, 72b) wegverschoben zu werden; wobei das Verbindungsteil (92, 92a, 92b) normalerweise die über den Drücker erfolgende Betätigung des Schalters (54, 54a, 54b) erlaubt und auf Betätigung der Bremsmittel (34, 34a, 34b) mindestens zum Teil zwischen dem Schalter (54, 54a) und dem Drücker (72, 72a) wegbewegt wird, um zu bewirken, daß der Schalter (54, 54a) in seine vorgespannte Ausschaltstellung zurückgeführt wird.

7. Eine Vorrichtung nach Anspruch 6, gekennzeichnet durch das Merkmal, daß:

(a) das Verbindungsteil (92, 92a) länglich ist, um sich vom Bremsen-Anschlußteil (96, 96a) in die Nähe des Schalters (54, 54a) und des Drückers (72, 72a) zu erstrecken,

(b) die Bremsmittel (34, 34a) entlang einer vorgegebenen Distanz zwischen Stoppen und Lösen der Kettensäge (12) verschiebbar sind und

(c) das Verbindungsteil (92, 92a) quer zur Drückerbewegung verschoben wird, wodurch sich das Verbindungsteil (92, 92a) bei gelösten Bremsmitteln (34, 34a) zwischen dem Schalter (54, 54a) und dem Drücker (72, 72a) befindet und bei gestoppten Bremsmitteln (34, 34a) einen entsprechenden Abstand zwischen dem Schalter (54, 54a) und dem Drücker (72, 72a) wegverschoben ist.

8. Eine Vorrichtung nach Anspruch 7, in der:

(a) der Drücker (72, 72a) einen Vorsprung (84, 84a) hat,

(b) der Vorsprung (84, 84a) an seinem freien Ende (98), 98a) im Eingriff mit dem Verbindungsteil (92, 92a) steht, wenn sich das Verbindungsteil (92, 92a) zwischen dem Schalter (54, 54a) und dem Drücker (72, 72a) befindet und

(c) das Verbindungsteil (92, 92a) vom Vorsprung (84, 84a) zurückgezogen ist, wenn die Bremsmittel (34, 34a) die Kettensäge (12) stoppen, wodurch der Vorsprung (84, 84a) benachbart zu und in nicht berührender Beziehung mit dem Schalter (54, 54a) bleibt, um eine Anordnung des Verbindungsteils (92, 92a) dazwischen so lange zu verhindern, wie der Drücker (72, 72a) niedergedrückt ist, unabhängig davon, ob die Bremsmittel (34, 34a) die Kettensäge (12) stoppen oder freigeben.

9. Eine Vorrichtung nach Anspruch 8, in der:

(a) das Verbindungsteil (92, 92a) mindestens eine Krümmung (102) hat, die seine Durchbiegung ermöglicht.

10. Eine Vorrichtung nach Anspruch 9, dadurch gekennzeichnet, daß:

(a) der Drücker (72) im Gehäuse (14) verschwenkbar und in freigegebener Stellung vorgespannt ist,

(b) der Drücker (72) niederdrückbar ist, um einen Bogen (86) an seinem Vorsprung außerhalb der Berührung mit dem Schalter (54) zu beschreiben, und

(c) das Verbindungsteil (92) zwischen dem Schalter (54) und dem Vorsprung (84) vei freigegebenem Drücker (72) positionierbar ist.

11. Eine Vorrichtung nach Anspruch 10, in der:

(a) ein Drehpunkt (66) im Gehäuse oberhalb des Vorsprungs gebildet ist, und

(b) das Niederdrücken des Drückers (72) bewirkt, daß der Vorsprung (84) in Eingriff mit dem Verbindungsteil (92) gebracht wird und dieses um den Drehpunkt (66) biegt, um einen kurzen Bogen in Berührung mit dem Schalter (54) zu beschreiben, wodurch der Schalter (54) in die Einschaltstellung verschoben wird.

12. Eine Vorrichtung nach Anspruch 11, in der:

(a) ein Anschlag (68) im Gehäuse (14) unterhalb des Drehpunktes (66) und oberhalb des Vorsprungs (84) vorgesehen ist,

(b) das Verbindungsteil (92) auf dem Anschlag (68) ruht, wannimmer die Bremsmittel (34) das Verbindungsteil (92) von dem Schalter (54) und dem Drücker (72) wegverschwenken, und

(c) der Anschlag (68) das Verbindungsteil (92) über den Vorsprung (84) bei Freigabe der Bremsmittel (36) und bei Freigabe des Drückers führt.

13. Eine Sperrvorrichtung (104) zur Steuerung des Betriebes eines Antriebsmittels, das eine Kettensäge (12) antreibt, die ein Gehäuse (14) mit Bremsmitteln (34) zum Stoppen der Kettensäge (12) und ein im Gehäuse (14) angebrachten Schalter (54) und ein verschiebbares, den Schalter berührendes Teil aufweist, das gegen den Schalter zur Aktivierung des Schalters drückbar ist; gekennzeichnet durch das Merkmal, daß die Sperrvorrichtung eine Drücker (72), der gelenkig im Gehäuse (14) angebracht und in einem Bogen (86) in nicht berührender Beziehung zu einem Betätigungsknopf (56) des Schalters (54) verschwenkbar und zur Aktivierung des Schalters (54) betätigbar ist, wobei der Betätigungsknopf (56) in eine Ausschaltstellung vorgespannt und in eine Einschaltstellung verschiebbar ist; und Verbindungsmittel aufweist, die dazu dienen, eine Inaktivierung des Schalters (54) zu ermöglichen, und ein Verbindungsteil (92) als ein den Schalter berührendes Teil enthalten, das als Verbindung zwischen dem Knopf (56) und dem Drücker (72) anzuordnen ist, wobei das Verbindungsteil (92) an den Bremsmitteln (34) verankert und mit diesen verschiebbar ist, damit das Verbindungsteil (92) als Verbindung zwischen dem Knopf (56) und dem Drücker (72) anordbar und von der Verbindung dazwischen wegbewegbar ist.

14. Eine Vorrichtung nach Anspruch 13, in der:

(a) das Verbindungsteil (92) durch die Bremsmittel (34) in den und aus den schwenkbaren Bogen (86) des Drückers (72) verschiebbar ist, um eine Verbindung zwischen dem Drücker (72) und dem Schalter (54) zu ermöglichen und zu verhindern.

15. Eine Vorrichtung nach Anspruch 14, in der:

(a) ein Vorsprung (84) auf dem Drücker (72) ausgebildet ist, um in einen Bogen benachbart zu und außerhalb des Kontaktes mit dem Knopf (56) zu verschwenken und

(b) der Vorsprung (84) das Verbindungsteil (92) berührt, wenn das Verbindungsteil (92) in den Bogen (86) verschwenkt wird, damit das Verbindungsteil (92) den Knopf (56) berühren und den Schalter (54) als Folge der Bewegung des Drückers (72) betätigen kann.

16. Eine Vorrichtung nach Anspruch 15, in der:

(a) der Vorsprung (84) das Verbindungsteil (92) an einem Zurückschwenken in den Bogen (86) hindert, wenn das Verbindungsteil (92) einmal von diesem weggezogen und der Vorsprung (84) aus der Sperrposition bei Freigabe des Drückers (72) gelöst ist.

17. Eine Vorrichtung nach einem der Ansprüche 13 bis 16, in der:

(a) das Verbindungsteil (92) eine Krümmung (102) hat, die eine Biegung ermöglicht.

18. Eine Vorrichtung nach einem der Ansprüche 13 bis 17, in der:

(a) das Verbindungsteil (92) halbstarr ist,

(b) der Drehpunkt (66) in dem Gehäuse (14) oberhalb des Verbindungsteils (92) ausgebildet ist und

(c) das Verbindungsteil (92) bei Berührung durch den Drücker (72) in Eingriff mit dem Drehpunkt (66) gebracht wird, wodurch das Verbindungsteil (92) an seinem freien Ende (98) verschwenkt wird, um den Knopf (56) in die Einschaltstellung zu verschieben.

19. Eine Sperrvorrichtung (104, 104a, 104b) für Antriebsmittel, die ein erstes Teil (56, 56a, 56b) als Schaltmittel zum An- und Abschalten der Antriebsmittel; ein verschiebbar angebrachtes zweites Teil (72, 72a, 72b) zur Betätigung des ersten Teils (56, 56a, 56b) und ein drittes Teil (34, 34a, 34b) aufweist, das dazu dient, ein viertes Teil (92, 92a, 92b) zu verschieben oder dessen Verschiebung zu ermöglichen, welches mit dem dritten Teil (34, 34a, 34b) verschiebbar ist, um das erste Teil (56, 56a, 56b) zu inaktivieren und eine Wiederbetätigung des ersten Teils (56, 56a, 56b) ohne Freigabe und Rücksetzen des zweiten Teils (72, 72a, 72b) zu verhindern, gekennzeichnet durch das Merkmal, daß:

(a) das erste Teil (56, 56a, 56b) normalerweise in einer Stellung vorgespannt ist;

(b) das zweite Teil (72, 72a, 72b) zu und von dem ersten Teil (54, 54a, 54b) weg in einer nicht berührenden Beziehung zu diesem verschiebbar ist;

(c) das dritte Teil (34, 34a, 34b) sich entfernt von dem ersten und dem zweiten Teil (54, 54a, 54b und 72, 72a, 72b) befindet und eine nähere Stellung und eine entferntere Stellung bezüglich des ersten und zweiten Teils (54, 54a, 54b und 72, 72a, 72b) einnimmt und

(d) das vierte Teil (92, 92a, 92b) mit dem dritten Teil (34, 34a, 34b) verbunden ist und mit dem dritten Teil in dessen näherer Stellung das vierte Teil (92, 92, 92b) zwischen dem ersten und dem zweiten Teil angeordnet ist, um eine Verbindung zwischen diesen zu ermöglichen, wodurch die Antriebsmittel ein- und ausgeschaltet werden, und mit dem dritten Teil (34, 34a, 34b) in dessen entfernterer Stellung das vierte Teil (92, 92a, 92b) weggezogen ist, um eine Verbindung zwischen dem ersten (54, 54a, 54b) und dem zweiten Teil (72, 72a, 72b) zu verhindern, und von einer Berührung mit diesen Teilen weggezogen ist.

20. Eine Vorrichtung nach Anspruch 19, in der:

(a) das vierte Teil (92) einen Berührungspuffer (100) hat, um die Berührung zu erhöhen,

(b) das vierte Teil am dritten Teil verankert ist, um mit diesem verschoben zu werden, und

(c) das vierte Teil eine Krümmung (102) aufweist, die eine Biegung ermöglicht.

21. Eine Vorrichtung nach Anspruch 19, in der:

(a) das zweite Teil (72) in einen Bogen (86) verschwenkbar ist,

(b) ein Vorsprung (84) auf dem zweiten Teil (72) ausgebildet ist, um dieses in einen Bogen in nicht berührender Beziehung zu dem ersten Teil (54) zu verschwenken,

(c) der Vorsprung (84) das vierte Teil (92) berührt, wenn das vierte Teil (92) zwischen dem ersten und dem zweiten Teil (54 und 72) angeordnet ist, und

(d) der Vorsprung (84) das vierte Teil (92) an einer Verbindung mit dem ersten und dem zweiten Teil (54 und 72) hindert, wenn es einmal von diesen weggezogen ist, bis das zweite Teil (72) vom ersten Teil (54) wegverschoben worden ist.

FIG. 1

FIG. 2

FIG. 3

FIG. 4

FIG. 5

FIG. 6

FIG. 7

FIG. 8

FIG. 9

FIG. 10